# EUROPEAN PATENT SPECIFICATION

(11) **EP 1 577 326 B1**
(45) Date of publication and mention of the grant of the patent: **13.08.2008**
(21) Application number: 03782817.5
(22) Date of filing: 19.12.2003
(51) Int. Cl.: C08F 8/00, C08F 2/44, C08F 2/38

(54) **PROCESS FOR PRODUCTION OF A VINYL POLYMER TERMINATED WITH A GROUP HAVING A POLYMERIZABLE CARBON-CARBON DOUBLE BOND**
VERFAHREN ZUR HERSTELLUNG EINES VINYLPOLYMERS, DAS MIT EINER GRUPPE MIT EINER POLYMERISIERBAREN KOHLENSTOFF-KOHLENSTOFF-DOPPELBINDUNG TERMINIERT IST
PROCEDE DE PRODUCTION D'UN POLYMERE DE VINYLE TERMINE PAR UN GROUPE A DOUBLE LIAISON CARBONE-CARBONE POLYMERISABLE

(30) Priority: 24.12.2002 JP 2002371694
(43) Date of publication of application: 21.09.2005
(73) Proprietor: KANEKA CORPORATION, Osaka-shi, Osaka 530-8288 (JP)
(72) Inventor: Harada, Hajime, c/o Kaneka Corporation, Settsu-shi, Osaka 566-0072 (JP); Kitano, Kenichi, c/o Kaneka Corporation, Settsu-shi, Osaka 566-0072 (JP); Nakagawa, Yoshiki, c/o Kaneka Corporation, Settsu-shi, Osaka 566-0072 (JP)
(74) Representative: Hart-Davis, Jason
(86) International application number: PCT/JP2003/016306
(87) International publication number: WO 2004/058830

(56) References cited:
- EP-A- 0 976 766
- EP-A- 1 059 308
- EP-A2- 0 789 036
- WO-A1-99/43719
- JP-A- 2000 136 211

## Description

### Technical Field

The present invention relates to a process for producing a vinyl polymer terminated with a group having a polymerizable carbon-carbon double bond.

### Background Art

It has been known that a polymer having a molecular chain terminated with an alkenyl group is cross-linked singly or using a hydrosilyl group-containing compound as a curing agent to produce a cured product with excellent heat resistance and durability. Examples of the main chain skeleton of such a polymer include polyether polymers such as polyethylene oxide, polypropylene oxide, and polytetramethylene oxide; hydrocarbon polymers such as polybutadiene, polyisoprene, polychloroprene, polyisobutylene, and hydrogenated products thereof; polyester polymers such as polyethylene terephthalate, polybutylene terephthalate, and polycaprolactone; and polysiloxane polymers such as polydimethylsiloxane. These main chain skeletons are used for various applications according to the characteristics thereof.

A vinyl polymer has characteristics such as high weather resistance, heat resistance, oil resistance, transparency, etc., which cannot be obtained by the above-descried polymers. For example, in Patent Documents 1 and 2, it is proposed that a vinyl polymer containing an alkenyl group in its side chain is used as a coating material having high weather resistance.

On the other hand, a vinyl polymer terminated with an alkenyl group has been hardly put into practical use because of the difficulty of production.

Patent Document 3 discloses a process in which an acrylic polymer having alkynyl groups at both ends is produced using alkenyl group-containing dithiocarbamate or diallyl disulfide as a chain transfer agent.

Patent Document 4 discloses a process in which an acrylic polymer terminated with a hydroxyl group is produced using a hydroxyl group-containing polysulfide or an alcohol compound as a chain transfer agent, and then an acrylic polymer terminated with an alkenyl group is produced using reactivity of the hydroxyl group.

On the other hand, curable rubber elastic compositions are widely used as an adhesive, a sealant, a cushioning material, and the like. The curing rubber elastic compositions are roughly divided by curing means into (A) so-called moisture curing compositions which are cured by reaction with atmospheric moisture (H₂O) to produce rubber elastic materials, and (B) compositions which are cured by curing reaction between a polymer and a curing agent (for example, cured by hydrosilylation reaction between (b1) an acrylic polymer terminated with an alkenyl group and (b2) a curing agent having a plurality of SiH groups).

However, the above-described processes for producing polymers has difficulty in securely introducing alkenyl groups at the ends of polymers. Also, the processes utilize ordinary radical polymerization and thus produce polymers generally having a molecular weight distribution (ratio between weight-average molecular weight and number-average molecular weight) of as high as 2 or more. Therefore, the processes have the problem of high viscosity. For example, when the resultant polymer is used as a sealant or an adhesive, high viscosity causes the problem that handling in working becomes difficult or a large amount of a filler cannot be mixed.

Furthermore, it has been difficult to introduce a (meth)acryloyl group having a polymerizable carbon-carbon double bond into a vinyl polymer produced by radical polymerization. In particular, a vinyl polymer as an oligomer having a (meth)acryloyl group introduced into its end has been hardly synthesized.

A (meth)acryloyl group-containing compound with a low molecular weight is often used for a composition curable with active energy rays such as ultraviolet rays (UV) or electron rays, or a thermosetting composition. In this case, the odor produced by evaporation of an unreacted low-molecular-weight compound having a low boiling point becomes a large problem during curing and after curing. In order to overcome the problem, a (meth)acryloyl group-containing oligomer having a relatively high molecular weight and low volatility may be used. However, a process for producing such an oligomer is limited, and the oligomer is also limited to an epoxy acrylate type, a urethane acrylate type, a polyester acrylate type, and the like. In addition, the molecular weight of the resultant oligomer is generally not so high. When an oligomer having a low molecular weight is used, the cured product has a low molecular weight between crosslinking points. In this case, it is difficult to obtain a cured product having high rubber elasticity, and the cured product becomes relatively hard.

The above-described curable compositions can be also applied to a coating material. An environmental problem brings about a change in a technique for forming a coating, and a volatile organic compound (VOC) which is released to air from a coating causes the problem of environmental pollution. For a water-based coating, a volatile solvent is used for promoting aggregation of latex particles and formation of a film. In this case, a dispersion of a polymer or copolymer having a glass transition temperature (Tg) higher than room temperature is prepared and then plasticized using a volatile solvent to effectively decrease Tg, and a film is formed at room temperature. When the solvent is evaporated after the formation of the film, the film can be effectively formed at a temperature lower than actual Tg. The formation of the film generally requires no external heating. Although this method is relatively preferable, the application range of the method has been recently narrowed more and more due to the strict restriction on the VCO level of the coating all over the world.

For example, Patent Documents 5, 6, and 7 disclose a few processes for producing vinyl polymers each having a (meth)acryloyl group introduced in a molecular end at a high ratio.

However, in a vinyl polymer terminated with a group having a polymerizable carbon-carbon double bond, the polymerizable terminal group may react due to various causes during production or storage of the polymer. When the terminal group reacts during production or storage of the vinyl polymer, dimerization reaction of the polymer or polymerization reaction of the polymerizable terminal group occurs to increase the viscosity of the polymer and accelerate deterioration such as gelation or the like. When an increase in viscosity or gelation proceeds, in many cases, the industrial-scale production of the polymer becomes difficult, and the physical properties of the vinyl polymer degrade.

In order to suppress reaction of the terminal group during production of a vinyl polymer, another process for producing the vinyl polymer is disclosed, in which the vinyl polymer is produced in the presence of hydroquinone, hydroquinone monomethyl ether, or the like (Patent Document 8). Although such a substance servers as an effective reaction inhibitor in the presence of a sufficient amount of oxygen in a vapor phase, the substance is not so effective for the case of a low oxygen concentration (for example, an oxygen partial pressure of 10,000 Pa or less). Namely, in a step of heating in a nitrogen atmosphere or a step of distilling off a solvent by heating under reduced pressure, the vapor phase has a low oxygen concentration or the system does not contain oxygen, and thus a substance such as hydroquinone, hydroquinone monomethyl ether, or the like is not much effective. In order to stably produce the vinyl polymer terminated with a group having a polymerizable carbon-carbon double bond with high quality, therefore, a more effective polymerization inhibitor must be used.

As the polymerization inhibitor for a compound having a polymerizable carbon-carbon double bond, 2,2,6,6-tetramethyl-4-oxo-piperidine has attracted attention. Also, it has been proposed to use a nitroxide compound (Patent Document 9), 4-hydroxy-2,2,6,6-tetramethyl-1-oxyl-piperidine alone or combination with hydroquinone (Patent Document 10), combination of a 2,2,6,6-tetramethyl piperidine compound and a nitroxide compound (Patent Document 11), combination of a nitroxide compound, a phenol compound, and a phenothiazine compound (Patent Document 12), combination of a nitroxide compound and corresponding hydroxylamine and diheterosubstituted benzene compound (Patent Document 13), combination of a nitroxide compound and corresponding hydroxypiperidine and piperidine (Patent Document 14), or the like. Furthermore, as a method for suppressing thermal decomposition and crosslinking of a main chain without consideration of a terminal functional group, a method of adding a nitroxide compound to a polymer has been proposed (Patent Document 15). Methods disclosed as a method for stabilizing a resin terminated with a group having a polymerizable carbon-carbon double bond include a method of adding a nitroxide compound for preventing polymerization of epoxyacrylate (Patent Document 16), and a method using a specific nitroxide compound as a vinyl polymerization inhibitor (Patent Document 17). Patent Documents 18 and 19 disclose a method of adding a nitroxide compound for stabilizing a resin terminated with a group having a polymerizable carbon-carbon double bond. However, none of these documents discloses a method for producing a polymer comprising a vinyl polymer main chain because the production thereof is difficult.
(Patent Document 1) : Japanese Unexamined Patent Application Publication No. 3-277645
(Patent Document 2): Japanese Unexamined Patent Application Publication No. 7-70399
(Patent Document 3): Japanese Unexamined Patent Application Publication No. 1-247403
(Patent Document 4): Japanese Unexamined Patent Application Publication No. 6-211922
(Patent Document 5): W09965963
(Patent Document 6): Japanese Unexamined Patent Application Publication No. 2001-55551
(Patent Document 7): Japanese Unexamined Patent Application Publication No. 2000-136287
(Patent Document 8): Japanese Unexamined Patent Application Publication No. 63-316745
(Patent Document 9): Patent No. 1212058
(Patent Document 10): Chinese Patent No. 1052847
(Patent Document 11): Japanese Patent Application No. 8-48650
(Patent Document 12): Patent No. 2725593
(Patent Document 13): Japanese Unexamined Patent Application Publication No. 9-124713
(Patent Document 14): Japanese Unexamined Patent Application Publication No. 2001-247491
(Patent Document 15): Japanese Unexamined Patent Application Publication No. 8-239510
(Patent Document 16): Japanese Examined Patent Application Publication No. 52-107090
(Patent Document 17): Patent No. 1885320
(Patent Document 18): Japanese Unexamined Patent Application Publication No. 10-7918
(Patent Document 19): Japanese Unexamined Patent Application Publication No. 10-7919

### Disclosure of Invention

An object of the present invention is to provide a process for effectively stabilizing a vinyl polymer terminated with a group having a polymerizable carbon-carbon double bond, and specifically provide a process for stably producing the vinyl polymer with high quality by suppressing polymerization reaction of the terminal group having the polymerizable carbon-carbon double bond.

The present inventors found that a vinyl polymer terminated with a group having a polymerizable carbon-carbon double bond can be significantly stabilized in the presence of a stable free radical serving as a polymerization inhibitor.

Namely, the present invention provides a process for producing a vinyl polymer terminated with a group having a polymerizable carbon-carbon double bond in the presence of a stable free radical.

In the present invention, the group having the polymerizable carbon-carbon double bond in the vinyl polymer is preferably represented by general formula (1):

-OC(O)C(R¹)=CHR² (1)

(wherein R¹ and R² are the same or different and each represent hydrogen or an organic group having 1 to 20 carbon atoms).

In formula (1), preferably, R¹ and R² are the same or different and each represent hydrogen or a saturated or unsaturated hydrocarbon group having 1 to 10 carbon atoms. More preferably, R¹ and R² are the same or different and each represent hydrogen, methyl, phenyl, or 1-propenyl. R² is not particularly limited, but it is preferably hydrogen or a saturated or unsaturated hydrocarbon group having 1 to 10 carbon atoms. R² may be an aryl group which may be substituted by an additional group. R² is preferably hydrogen, methyl, phenyl, or 1-propenyl.

The vinyl polymer is preferably a vinyl polymer produced by living radical polymerization, more preferably atom transfer radical polymerization, or a vinyl polymer comprising a polymer main chain produced by polymerization of a vinyl monomer using a chain transfer agent. In particular, atom transfer radical polymerization is preferred, and a complex of a metal selected from the group consisting of copper, nickel, ruthenium, and iron is preferably used in polymerization. Among these metal complexes, a copper complex is more preferably used.

In the present invention, the terminal functional group is not particularly limited, but it is preferably produced by reaction between a vinyl polymer having a terminal structure represented by formula (2):

-CR³R⁴X (2)

(wherein R³ and R⁴ each represent a group bonded to an ethylenically unsaturated group of a vinyl monomer, and X represents chlorine, bromine, or iodine), and a compound represented by formula (3):

M⁺-OC(O)C(R¹)=CHR² (3)

(wherein R¹ and R² are the same or different and each represent hydrogen or an organic group having 1 to 20 carbon atoms, and preferably, R¹ and R² are the same or different and each represent hydrogen or a saturated or unsaturated hydrocarbon group having 1 to 10 carbon atoms; and M⁺ represents an alkali metal or a quaternary ammonium ion); reaction between a vinyl polymer terminated with a hydroxyl group and a compound represented by formula (4):

XC(O)C(R¹)=CHR² (4)

(wherein R¹ and R² are the same or different and each represent hydrogen or an organic group having 1 to 20 carbon atoms, and preferably, R¹ and R² are the same or different and each represent hydrogen or a saturated or unsaturated hydrocarbon group having 1 to 10 carbon atoms; and X represents chlorine, bromine, or OH); or reaction between a vinyl polymer terminated with a hydroxyl group and a diisocyanate compound and then reaction between the residual isocyanate group and a compound represented by formula (5):

HO-R⁵-OC(O)C(R¹)=CHR² (5)

(wherein R¹ and R² are the same or different and each represent hydrogen or an organic group having 1 to 20 carbon atoms, and preferably, R¹ and R² are the same or different and each represent hydrogen or a saturated or unsaturated hydrocarbon group having 1 to 10 carbon atoms; and R⁵ represents a divalent organic group having 2 to 20 carbon atoms, and preferably, R⁵ represents hydrogen or a saturated or unsaturated hydrocarbon group having 1 to 10 carbon atoms).

In particular, the method using a terminal group represented by formula (2) and a compound represented by formula (3) is preferred.

The vinyl polymer of the present invention is preferably a (meth)acrylic polymer or styrene polymer, and more preferably an acrylic ester polymer. The number-average molecular weight is preferably 2,000 or more, and the ratio (Mw/Mn) of the weight-average molecular weight (Mw) to the number-average molecular weight (Mn) according to gel permeation chromatographic measurement is preferably less than 1.8.

The present invention also provides a process for producing a vinyl polymer terminated with a group having a polymerizable carbon-carbon double bond in the presence of a stable free radical, the process comprising distilling off a solvent from a solution containing the vinyl polymer by heating under reduced pressure in the presence of the stable free radical.

The present invention further provides a process for producing a vinyl polymer terminated with a group having a polymerizable carbon-carbon double bond in the presence of a stable free radical under the condition in which the oxygen partial pressure is 10,000 Pa or less.

### Best Mode for Carrying Out the Invention

The present invention will be described in detail below.

In the present invention, the term "stable free radical" means a substance group which can be generally stored at room temperature for a long period of time, unlike free radicals with very short lives which are induced from peroxides or azo initiators. Examples of the stable free radical useful in the present invention include nitroxide compounds. In the present invention, the nitroxide compounds are compounds having an oxygen radical bonded to a nitrogen atom (i.e., having a N-O· group). Examples of the nitroxide compounds are given below. 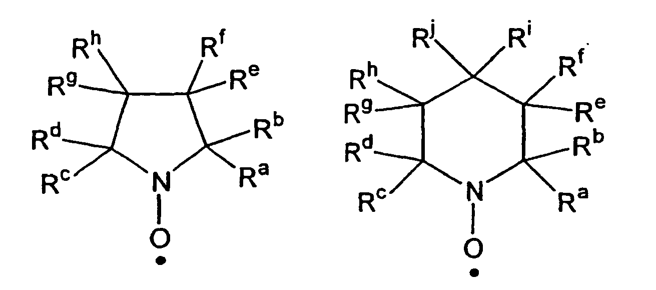 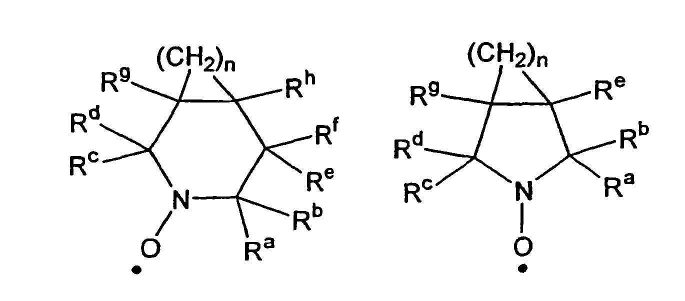 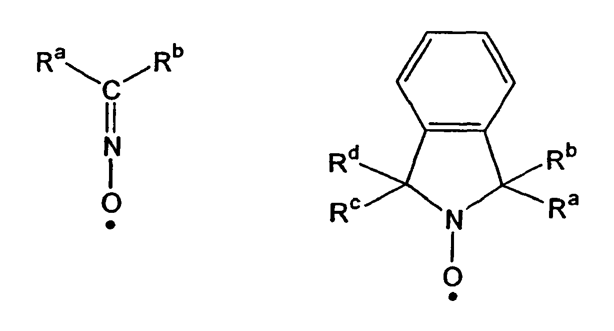 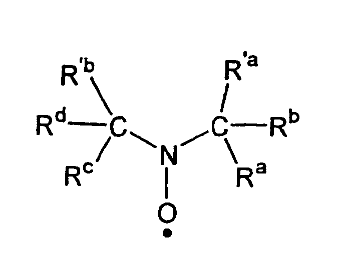 (wherein R^{a}, R^{b}, R^{c}, R^{d}, R'^{a}, and R'^{b} may be the same or different and each represent a halogen atom such as chlorine, bromine, or iodine, a saturated or unsaturated straight, branched, or cyclic hydrocarbon group such as alkyl or phenyl, ester -COOR, alkoxy -OR, phosphate -PO(OR)₂, or a polymer chain which may be a polyolefin chain such as a polymethyl methacrylate chain, a polybutadiene chain, a polyethylene chain, or a polypropylene chain, preferably a polystyrene chain; R^{e}, R^{f}, R^{g}, R^{h}, Rⁱ, and R^{j} may be the same or different and each represent a group which can be selected from the groups described above for R^{a}, R^{b}, R^{c}, R^{d}, R^{'1}, and R'², a hydrogen atom, hydroxyl -OH, or an acid group such as -COOH, -PO(OH)₂, or -SO₃H; R^{a}, R^{b}, R^{c}, and R^{d} are preferably the same or different and each represent a group selected from the group consisting of methyl, ethyl, propyl, and isopropyl; and R represents a saturated or unsaturated hydrocarbon group having 1 to 8 carbon atoms).

The amount of the polymerization inhibitor added in the present invention depends on the type of the vinyl compound used, the process conditions, the necessity of polymerization inhibition, and the like, and cannot be unconditionally determined. However, the amount of the stable free radical compound is generally 10 to 10,000 ppm, preferably 30 to 5,000 ppm, more preferably 40 to 2,000 ppm, and most preferably 50 to 500 ppm relative to the vinyl compound. With the amount less than 10 ppm, the intended effect of the present invention may be insufficient. In contrast, with the amount over 10,000 ppm, the effect is sufficient but is uneconomically small for the adding amount, and a trouble may occur in various applications of the vinyl polymer containing a group having a stabilized polymerizable carbon-carbon double bond.

In the process of the present invention, the stable free radical compound may be added to a fluid in an intended step, and the addition method is not particularly limited. However, the free radical compound is previously added together with a raw material or added to a reactor or a storage tank. In particular, the free radical compound is preferably added in a production step because the production step often includes a step of distilling off a solvent by heating under reduced pressure. It is practically advantageous that the free radical compound is dissolved in a solvent flowing in the intended step, and the resultant solution is added.

In carrying out the present invention, the free radical compound may be added together with another known polymerization inhibitor in a range causing no adverse effect on the present invention. The present invention has no limitation to combination with another known polymerization inhibitor.

Next, description will be made of the vinyl polymer terminated with a polymerizable carbon-carbon double bond stabilized in the present invention.

Specifically, the vinyl polymer is preferably a vinyl polymer having at least one group represented by formula 1 per molecular at a molecular end.

-OC(O)C(R¹)=CHR² (1)

(wherein R¹ and R² each represent hydrogen or an organic group having 1 to 20 carbon atoms). In formula 1, preferably, R¹ and R² are the same or different and each represent hydrogen or a saturated or unsaturated hydrocarbon group having 1 to 10 carbon atoms. More preferably, R¹ and R² are the same or different and each represent hydrogen, methyl, phenyl, or 1-propenyl.

The number of groups represented by formula 1 is not particularly limited, but the number is preferably 1 or more per molecule because the number of less than 1 per molecule causes deterioration in curability. The number of the groups represented by formula 1 per molecule of the vinyl polymer of the present invention is not particularly limited, but the number is preferably 1.2 to 4.

Specific examples of R¹ in formula 1 include -H, -CH₃, - CH₂CH₃, -(CH₂)ₙCH₃ (n represents an integer of 2 to 19), -C₆H₅, -CH₂OH, and -CN. Among these groups, -H and -CH₃ are preferred.

### <Main chain of polymer>

The monomer constituting the main chain of the vinyl polymer of the present invention is not particularly limited, and various monomers can be used. Examples of the monomer include (meth)acrylic acid monomers such as (meth)acrylic acid, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, phenyl (meth)acrylate, tolyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth)acrylate, γ-(methacryloyloxypropyl)trimethoxysilane, ethylene oxide adducts of (meth)acrylic acid, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, 2-perfluoroethyl (meth)acrylate, perfluoromethyl (meth)acrylate, diperfluoromethylmethyl (meth)acrylate, 2-perfluoromethyl-2-perfluoroethylmethyl (meth)acrylate, 2-perfluorohexylethyl (meth)acrylate, 2-perfluorodecylethyl (meth)acrylate, and 2-perfluorohexadecylethyl (meth)acrylate; styrene monomers such as styrene, vinyltoluene, α-methylstyrene, chlorostyrene, and styrenesulfonic acid and salts thereof; fluorine-containing vinyl monomers such as perfluoroethylene, perfluoropropylene, vinylidene fluoride; silicon-containing vinyl monomers such as vinyl trimethoxysilane and vinyl triethyoxysilane; maleic acid anhydride, maleic acid, and monoalkyl and dialkyl esters of maleic acid; fumaric acid and monoalkyl and dialkyl esters of fumaric acid; maleimide monomers such as maleimide, methylmaleimide, ethylmaleimide, propylmaleimide, butylmaleimide, hexylmaleimide, octylmaleimide, dodecylmaleimide, stearylmaleimide, phenylmaleimide, and cyclohexylmaleimide; nitrile-containing vinyl monomers such as acrylonitrile and methacrylonitrile; amido-containing vinyl monomers such as acrylamide and methacrylamide; vinyl esters such as vinyl acetate, vinyl propionate, vinyl pivalate, vinyl benzoate, and vinyl cinnamate; alkenes such as ethylene and propylene; conjugated dienes such as butadiene and isoprene; vinyl chloride; vinylidene chloride; allyl chloride; and allyl alcohol. These monomers may be used alone, or two or more may be copolymerized. In particular, the styrene monomers and (meth)acrylic acid monomers are preferred from the viewpoint of the physical properties of products, and the like. Acrylate monomers and methacrylate monomers are more preferred, and butyl acrylate is most preferred. In the present invention, any of the monomers may be copolymerized with another monomer. In this case, the content of the preferred monomer is preferably 40% or more by weight.

In the present invention, the term "(meth)acrylic polymer" means a polymer containing 40% by weight or more of a repeating unit derived from a (meth)acrylic acid monomer, and the term "acrylic ester polymer" means a polymer containing 40% by weight or more of a repeating unit derived from an acrylate.

The vinyl polymer of the present invention preferably has a molecular weight distribution, i.e., a ratio of the weight-average molecular weight to the number-average molecular weight measured by gel permeation chromatography, of less than 1.8, more preferably 1.7 or less, further preferably 1.6 or less, particularly preferably 1.5 or less, especially preferably 1.4 or less, and most preferably 1.3 or less. In the present invention, the molecular weight is generally determined in terms of polystyrene by GPC measurement using a polystyrene gel column or the like and chloroform, tetrahydrofuran, or the like as a mobile phase.

The number-average molecular weight of the vinyl polymer of the present invention is preferably in a range of 500 to 100,000 and more preferably 3,000 to 40,000. With a molecular weight of less than 500, the inherent characteristics of the vinyl polymer are not sufficiently exhibited, while with a molecular weight of over 100,0000, handling becomes difficult.

### <Polymerization>

The process for producing the vinyl polymer of the present invention is not particularly limited.

The polymer main chain of the vinyl polymer is generally produced by anionic polymerization or radical polymerization. However, in the present invention, the polymer main chain is preferably produced by living radical polymerization or radical polymerization using a chain transfer agent. In particular, the living radical polymerization is preferred.

Types of the radical polymerization process used for synthesizing the vinyl polymer (I) of the present invention are classified into a general radical polymerization process in which a monomer having a specified functional group and a vinyl monomer are simply copolymerized using an azo compound or a peroxide as a polymerization initiator, and a controlled radical polymerization process in which a specified functional group can be introduced into a controlled position such as an end or the like.

Although the general radical polymerization process is simple, a monomer having a specified functional group can be introduced into a polymer by this process only in a stochastic manner. Therefore, a large amount of the monomer must be used for obtaining a polymer with high functionality, and conversely, the use of a small amount of the monomer causes the problem of increasing the ratio of a polymer not containing the specified functional group. There is also the problem in which the molecular weight distribution becomes wide due to free radical polymerization, and thus only a polymer with high viscosity can be obtained.

Types of the controlled radical polymerization process can be further classified into a chain transfer agent process in which polymerization is performed using a chain transfer agent having a specified functional group to produce a vinyl polymer terminated with a functional group, and a living radical polymerization process in which a polymer propagation terminus propagates without causing termination reaction to produce a polymer having a molecular weight substantially as designed.

The chain transfer agent process is capable of producing a polymer having high functionality, but a large amount of the chain transfer agent having a specified functional group is required relative to the initiator, thereby causing the problem of increasing the cost including the treatment cost. As in the general radical polymerization process, the chain transfer agent process also has the problem in which the molecular weight distribution becomes wide due to free radical polymerization (i.e., relatively large Mw), and, consequently, the resultant polymer has higher viscosity and is thus difficult to handle.

A radical polymerization process is difficult to control on account of the high polymerization, and termination reaction due to coupling of radicals easily occurs. Unlike these polymerization processes, by the living radical polymerization, a polymer with a narrow molecular weight distribution (Mw/Mn of about 1.1 to 1.5) can be obtained because termination reaction little occurs, and the molecular weight can be freely controlled by controlling the charge ratio of the monomer to the initiator.

Therefore, the living radical polymerization process is capable of producing a polymer having a narrow molecular weight distribution and low viscosity, and introducing a monomer having a specified functional group into substantially a desired position. The living radical polymerization process is thus more preferred as the process for producing a vinyl polymer having the specified functional group.

In a narrow sense, the living polymerization means that termini constantly have activity to grow a molecular chain. However, the living polymerization generally includes pseudo-living polymerization in which a polymer chain is grown in equilibrium between inactivated termini and activated termini. The definition of the living polymerization in the present invention includes the latter.

In recent, the living radical polymerization process has been positively studied by various groups. Examples of the living radical polymerization process include a process using a cobalt porphyrin complex, as described in J. Am. Chem. Soc., 1994, vol. 116, p. 7943; a process using a radical scavenger such as a nitroxide compound or the like, as described in Macromolecules, 1994, vol. 27, p. 7228; and an atom transfer radical polymerization (ATRP) process using an organohalogen compound as an initiator and a transition metal complex as a catalyst.

Among these living radical polymerization processes, the atom transfer radical polymerization process for polymerizing a vinyl monomer using an organohalogen compound or a halogenated sulfonyl compound as an initiator and a transition metal complex as a catalyst has the characteristic that a halogen or the like relatively useful for functional group conversion reaction is present at an end, and the initiator and the catalyst have a high degree of design freedom in addition to the above-descried characteristics of the living radical polymerization process. Therefore, the atom transfer radical polymerization process is more preferred as the process for producing the vinyl polymer having the specified functional group. The atom transfer radical polymerization process is described in, for example, Matyjaszewski et al., J. Am. Chem. Soc., 1995, vol. 117, p. 5614; Macromolecules, 1995, vol. 28, p. 7901; Science, 1996, vol. 272, p. 866; WO96/30421; WO97/18247; and Sawamoto et al., Macromolecules, 1995, vol. 28, p. 1721.

In the present invention, any of the processes may be used without limitation, but controlled radical polymerization is basically used. As the controlled radical polymerization, living radical polymerization is preferred in view of ease of polymerization control, and atom transfer radical polymerization is particularly preferred.

First, the controlled radical polymerization process using the chain transfer agent will be described. The radical polymerization process using the chain transfer agent (telomer) is not particularly limited, but examples of a process for producing a vinyl polymer having a terminal structure suitable for the present invention include the following two processes:

A process for producing a halogen-terminated polymer using a halogenated hydrocarbon as a chain transfer agent, as disclosed in Japanese Unexamined Patent Application Publication No. 4-132706, and a process for producing a hydroxyl-terminated polymer using a hydroxyl-containing mercaptan or hydroxyl-containing polysulfide as a chain transfer agent, as disclosed in Japanese Unexamined Patent Application Publication Nos. 61-271306 and 54-47782 and Patent No. 2594402.

Next, the living radical polymerization will be described.

First, the process using a radical scavenger such as a nitroxide compound will be described. This polymerization process uses generally stable nitroxide (=N-O·) as a radical capping agent. Preferred examples of such a compound include, but not limited to, nitroxide compounds derived from cyclic hydroxyamines, such as 2,2,6,6-substituted-1-piperidinyloxy radicals and 2,2,5,5-substituted-1-pyrrolidinyloxy radicals. As a substituent, an alkyl group having 4 or less carbon atoms, such as methyl or ethyl, is suitable. Specific examples of the nitroxide compound include, but not limited to, 2,2,6,6-tetramethyl-1-piperidinyloxy (TEMPO), 2,2,6,6-tetraethyl-1-piperidinyloxy, 2,2,6,6-tetramethyl-4-oxo-1-piperidinyloxy, 2,2,5,5-tetramethyl-1-pyrrolidinyloxy, 1,1,3,3-tetramethyl-2-isoindolinyloxy, and N,N-di-tert-butylaminoxy. Instead of the nitroxide, a stable free radical such as a galvinoxyl free radical or the like may be used.

The radical capping agent is combined with a radical generator. A reaction product of the radical capping agent and the radical generator possibly serves as a polymerization initiator to progress polymerization of a addition polymerization monomer. The ratio between both agents added is not particularly limited, but the ratio of the radical initiator is preferably 0.1 to 10 moles per mole of the radical capping agent.

As the radical generator, any one of various compounds can be used, but a peroxide capable of generating a radical at a polymerization temperature is preferred. Examples of the peroxide include, but not limited to, diacyl peroxides such as benzoyl peroxide and lauroyl peroxide; dialkyl peroxide such as dicumyl peroxide and di-tert-butyl peroxide; peroxycarbonates such as diisopropyl peroxydicarbonate and bis(4-tert-butylcyclohexyl) peroxydicarbonate; alkyl peresters such as tert-butyl peroxyoctoate and tert-butyl peroxybenzoate. In particular, benzoyl peroxide is preferred. Instead of a peroxide, a radical generator such as a radical generating azo compound or the like, e.g., azobisisobutyronitrile, can be used.

As reported in Macromolecules, 1995, vol. 28, p. 2993, an alkoxyamine compound represented by the formula below may be used as an initiator instead of combination of the radical capping agent and the radical generator.

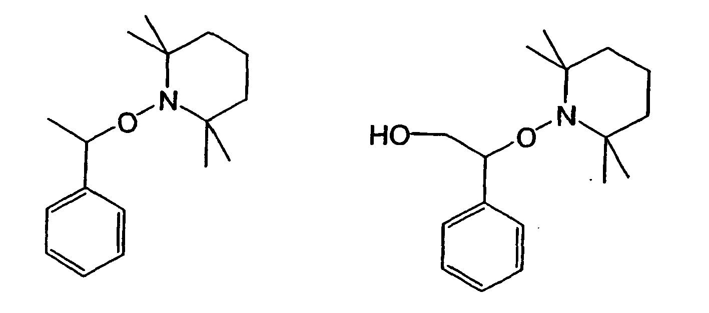

When the alkoxyamine compound having a functional group such as a hydroxyl group or the like, as represented by the above formula, is used as the initiator, a polymer terminated with a functional group is produced. The use of the compound in the process of the present invention produces a polymer terminated with a functional group.

The polymerization conditions such as the monomer, the solvent, the polymerization temperature, and the like used for polymerization using the nitroxide compound as the radical scavenger are not limited. However, the polymerization conditions may be the same as those for the atom transfer radical polymerization described below.

Next, the atom transfer radical polymerization process more preferred as the living radical polymerization process of the present invention will be described.

The atom transfer radical polymerization uses, as the initiator, an organic halide, particularly an organic halide having a carbon-halogen bond with high reactivity (for example, a carbonyl compound having halogen at the α-position or a compound having halogen at the benzyl position) or a halogenated sulfonyl compound.

Specific examples of the initiator include the following:

C₆H₅-CH₂X, C₆H₅-C(H)(X)CH₃, and C₆H₅-C(X)(CH₃)₂

(wherein C₆H₅ represents phenyl, and X represents chlorine, bromine, or iodine);

R⁶-C(H)(X)-CO₂R⁷, R⁶-C(CH₃)(X)-CO₂R⁷, R⁶-C(H)(X)-C(O)R⁷, and R⁶-C(CH₃)(X)-C(O)R⁷;

(wherein R⁶ and R⁷ each represent hydrogen or alkyl, aryl, or aralkyl having 1 to 20 carbon atoms, and X represents chlorine, bromine, or iodine);

R⁶-C₆H₄-SO₂X;

(wherein R⁶ represents hydrogen or alkyl, aryl, or aralkyl having 1 to 20 carbon atoms, and X represents chlorine, bromine, or iodine)

As the initiator for the atom transfer radical polymerization, an organic halide or halogenated sulfonyl compound which has a functional group other than a functional group for initiating polymerization can be used. In this case, the resultant vinyl polymer has a functional group at one of the main chain ends and the structure represented by formula 2 at the other end. Examples of such a functional group include alkenyl, crosslinkable silyl, hydroxyl, epoxy, amino, and amido.

Examples of an alkenyl group-containing organic halide include, but not limited to, compounds having a structure represented by formula 6:

R⁹R¹⁰C(X)-R¹¹-R¹²-C(R⁸)=CH₂ (6)

(wherein R⁸ represents hydrogen or methyl; R⁹ and R¹⁰ each represent hydrogen or monovalent alkyl, aryl, or aralkyl having 1 to 20 carbon atoms, or R⁹ and R¹⁰ represent groups bonded together at the other ends; R¹¹ represents -C(O)O-(ester group), -C(O)- (keto group), or o-, m-, or p-phenylene; R¹² represents a direct bond or a divalent organic group having 1 to 20 carbon atoms, which may contain at least one ether bond; and X represents chlorine, bromine, or iodine).

Specific examples of substituents R⁹ and R¹⁰ include hydrogen, methyl, ethyl, n-propyl, isopropyl, butyl, pentyl, and hexyl. R⁹ and R⁷ may be bonded together at the other ends to form a cyclic skeleton.

Specific examples of the alkynyl group-containing organic halide represented by formula 6 include the following compounds:

XCH₂C (O)O(CH₂)ₙCH=CH₂

H₃CC(H)(X)C(O)O(CH₂)ₙCH=CH₂

(H₃C)₂C(X)C(O)O(CH₂)ₙCH=CH₂

CH₃CH₂C(H)(X)C(O)O(CH₂)ₙCH=CH₂

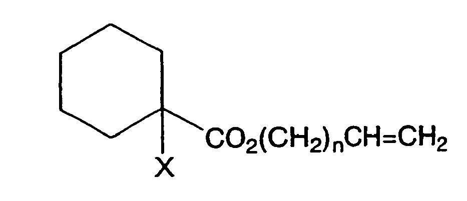

(wherein X represents chlorine, bromine, or iodine, and n represents an integer of 0 to 20)

XCH₂C(O)O(CH₂)ₙO(CH₂)ₘCH=CH₂

H₃CC(H) (X)C (O)O (CH₂)ₙO(CH₂)ₘCH=CH₂

(H₃C)₂C(X)C (O)O(CH₂)ₙO(CH₂)ₘCH=CH₂

CH₃CH₂C(H)(X)C (O)O(CH₂)ₙO(CH₂)ₘCH=CH₂

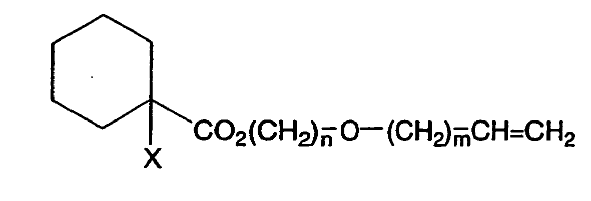

(wherein X represents chlorine, bromine, or iodine, n represents an integer of 1 to 20, and m represents an integer of 0 to 20)

O, m, p-XCH₂-C₆H₄-(CH₂)ₙ-CH=CH₂

O, m, p-CH₃C (H) (X) -C₆H₄- (CH₂)ₙ-CH=CH₂

O, m, p-CH₃CH₂C (H) (X) -C₆H₄- (CH₂)ₙ-CH=CH₂

(wherein X represents chlorine, bromine, or iodine, and n represents an integer of 0 to 20)

o, m, p-XCH₂-C₆H₄-(CH₂)ₙ-O-(CH₂)ₘ-CH=CH₂

o, m, p-CH₃C(H)(X)-C₆H₄-(CH₂)ₙ-O-(CH₂)ₘ-CH=CH₂

o, m, p-CH₃CH₂C(H)(X)-C₆H₄-(CH₂)ₙ-O-(CH₂)ₘCH=CH₂

(wherein X represents chlorine, bromine, or iodine, n represents an integer of 1 to 20, and m represents an integer of 0 to 20)

o, m, p-XCH₂-C₆H₄-O-(CH₂)ₙ-CH=CH₂

o, m, p-CH₃C(H)(X)-C₆H₄-O-(CH₂)ₙ-CH=CH₂

o, m, p-CH₃CH₂C (H) (X)-C₆H₄-O-(CH₂)ₙ-CH=CH₂

(wherein X represents chlorine, bromine, or iodine, and n represents an integer of 0 to 20)

o, m, p-XCH₂C₆H₄-O-(CH₂)ₙ-O-(CH₂)ₘ-CH=CH₂

o, m, p-CH₃C(H)(X)-C₆H₄-O-(CH₂)ₙ-O-(CH₂)ₘ-CH=CH₂

o, m, p-CH₃CH₂C(H) (X)-C₆H₄-O-(CH₂)ₙ-O-(CH₂)ₘCH=CH₂

(wherein X represents chlorine, bromine, or iodine, n represents an integer of 1 to 20, and m represents an integer of 0 to 20).

Further examples of the alkenyl group-containing organic halide include compounds represented by formula 7:

H₂C=C(R⁸)-R¹¹-C(R⁹)(X)-R¹³-R¹⁰ (7)

(wherein R⁸, R⁹, R¹⁰, R¹¹, and X represent the same as the above, and R¹³ represents a direct bond, -C(O)O- (ester group), -C(O)- (keto group), or o-, m-, or p-phenylene).

R¹¹ is a direct bond or a divalent organic group having 1 to 20 carbon atoms (which may contain at least one ether bond). When R¹¹ is a direct bond, the alkenyl group-containing organic halide is a halogenated allyl compound in which a vinyl group is bonded to a carbon to which a halogen is bonded. In this compound, the carbon-halogen bond is activated by the adjacent vinyl group, and thus R¹³ is not necessarily a C(O)O group, a phenylene group, or the like and may be a direct bond. When R¹² is not a direct bond, R¹³ is preferably a C(O)O group, a C(O) group, a phenylene group, or the like in order to activate the carbon-halogen bond.

Specific examples of compounds represented by formula 7 include the following:

CH₂=CHCH₂X

CH₂=C(CH₃)CH₂X

CH₂=CHC(H)(X)CH₃

CH₂=C (CH₃)C (H) (X)CH₃

CH₂=CHC(X)(CH₃)₂

CH₂=CHC(H)(X)C₂H₅

CH₂=CHC (H) (X)CH (CH₃)₂

CH₂=CHC (H) (X)C₆H₅,CH₂=CHC(H)(X)CH₂C₆H₅

CH₂=CHCH₂C (H) (X)-CO₂R

CH₂=CH (CH₂)₂C(H) (X)-CO₂R

CH₂=CH (CH₂)₃C(H) (X)-CO₂R

CH₂=CH (CH₂)₈C(H) (X)-CO₂R

CH₂=CHCH₂C (H) (X)-C₆H₅

CH₂=CH (CH₂)₂C (H) (X) -C₆H₅

CH₂=CH (CH₂)₃C (H) (X)-C₆H₅

(wherein X represents chlorine, bromine, or iodine, and R represents alkyl, aryl, or aralkyl having 1 to 20 carbon atoms).
Examples of the halogenated sulfonyl compound having an alkenyl group include the following:

o-, m-, p-CH₂=CH-(CH₂)ₙ-C₆H₄-SO₂X

o-, m-, p-CH₂=CH-(CH₂)ₙ-O-C₆H₄-SO₂X

(wherein X represents chlorine, bromine, or iodine, and n represents an integer of 0 to 20).

Specific examples of the organic halide having a crosslinkable silyl group include, but not particularly limited to, compounds having a structure represented by formula 8:

R⁹R¹⁰C(X)-R¹¹-R¹²-C(H) (R⁸)CH₂-[Si (R⁴)_{2-b}(Y)_{b}O]ₘ-Si(R¹⁵)₃₋ₐ(Y)ₐ (8)

(wherein R⁸, R⁹, R¹⁰, R¹¹, R¹², and X represent the same as the above; R¹⁴ and R¹⁵ each represents alkyl, aryl, or aralkyl having 1 to 20 carbon atoms or triorganosiloxy represented by (R')₃SiO- (the three R's each represent a monovalent hydrocarbon group having 1 to 20 carbon atoms and may be the same or different), and when two or more R¹⁴ or R¹⁵ are present, these groups may be the same or different; Y represents hydroxyl or a hydrolyzable group, and when two or more Ys are present, these groups may be the same or different; a represents 0, 1, 2, or 3; b represents 0, 1, or 2; m represents an integer of 0 to 19; and a + mb ≥ 1 is satisfied).

Specific example of compounds represented by formula 8 include the following:

XCH₂C(O)O(CH₂)ₙSi(OCH₃)₃

CH₃C(H)(X)C(O)O(CH₂)ₙSi(OCH₃)₃

(CH₃)₂C(X)C(O)O(CH₂)ₙSi(OCH₃)₃

XCH₂C(O)O(CH₂)ₙSi(CH₃)(OCH₃) ₂

CH₃C(H)(X)C (O)O(CH₂)ₙSi(CH₃) (OCH₃)₂

(CH₃)₂C(X)C(O) O(CH₂)ₙSi(CH₃) (OCH₃)₂

(wherein X represents chlorine, bromine, or iodine, and n represents an integer of 0 to 20).

XCH₂C (O)O(CH₂)ₙO(CH₂)ₘSi(OCH₃)₃

H₃CC (H) (X)C(O)O(CH₂)ₙO(CH₂)ₘSi(OCH₃)₃

(H₃C)₂C (X)C (O)O(CH₂) ₙO(CH₂)ₘSi(OCH₃)₃

CH₃CH₂C (H) (X)C (O)O(CH₂) ₙO(CH₂)ₘSi(OCH₃)₃

XCH₂C (O)O(CH₂) ₙO (CH₂) ₘSi(CH₃) (OCH₃)₂

H₃CC (H) (X)C(O)O(CH₂)ₙO(CH₂)ₘ-Si(CH₃)(OCH₃)₂

(H₃C) ₂C(X)C (O)O(CH₂)ₙO(CH₂)ₘ-Si(CH₃) (OCH₃)₂

CH₃CH₂C (H) (X)C(O)O(CH₂)ₙO(CH₂)ₘ-Si(CH₃)(OCH₃)₂

(wherein X represents chlorine, bromine, or iodine, n represents an integer of 1 to 20, and m represents an integer of 0 to 20).

o, m, p-XCH₂-C₆H₄-(CH₂)₂Si(OCH₃)₃

o, m, p-CH₃C(H)(X)-C₆H₄-(CH₂)₂Si(OCH₃)₃

o, m, p-CH₃CH₂C(H) (X)-C₆H₄-(CH₂)₂Si(OCH₃)₃

o, m, p-XCH₂-C₆H₄-(CH₂)₃Si(OCH₃)₃

o, m, p-CH₃C (H) (X) -C₆H₄- (CH₂) ₃Si (OCH₃)₃

o, m, p-CH₃CH₂C(H)(X)-C₆H₄-(CH₂)₃Si(OCH₃)₃

o, m, p-XCH₂-C₆H₄-(CH₂)₂-O-(CH₂)₃Si (OCH₃)₃

O, m, p-CH₃C(H) (X) -C₆H₄-(CH₂) ₂-O- (CH₂)₃Si (OCH₃)₃

o, m, p-CH₃CH₂C (H) (X)-C₆H₄-(CH₂)₂-O-(CH₂) ₃Si (OCH₃)₃

o, m, p-XCH₂-C₆H₄-O-(CH₂)₃Si (OCH₃)₃

o, m, p-CH₃C (H) (X) -C₆H₄-O-(CH₂) ₃Si (OCH₃)₃

o, m, p-CH₃CH₂C(H) (X)-C₆H₄-O-(CH₂)₃-Si (OCH₃)₃

o, m, p-XCH₂-C₆H₄-O-(CH₂)₂-O-(CH₂)₃-Si (OCH₃)₃

O, m, p-CH₃C(H)(X)-C₆H₄-O-(CH₂)₂-O-(CH₂)₃Si(OCH₃)₃

o, m, p-CH₃CH₂C(H) (X)-C₆H₄-O-(CH₂)₂-O-(CH₂)₃Si(OCH₃)₃

(wherein X represents chlorine, bromine, or iodine).

Further examples of the organic halide having a crosslinkable silyl group include compounds having a structure represented by formula 9:

(R¹⁵)₃₋ₐ(Y)ₐSi-[OSi(R¹¹)_{2-b}(Y)_{b}]ₘ-CH₂-C(H) (R⁹)-R¹²-C(R⁹)(X)-R¹³-R¹⁰ (9)

(wherein R⁸, R⁹, R¹⁰, R¹², R¹¹, R¹², R¹³, a, b, m, X, and Y represent the same as the above).

Specific examples of such compounds include the following:

(CH₃O)₃SiCH₂CH₂C(H) (X)C₆H₅

(CH₃O)₂(CH₃)SiCH₂CH₂C(H) (X)C₆H₅

(CH₃O)₃Si(CH₂)₂C(H)(X)-CO₂R

(CH₃O)₂(CH₃)Si(CH₂)₂C(H) (X)-CO₂R

(CH₃O)₃Si(CH₂)₃C(H) (X)-CO₂R

(CH₃O)₂(CH₃) Si (CH₂) ₃C (H) (X)-CO₂R

(CH₃O)₃Si(CH₂)₄C(H)(X)-CO₂R

(CH₃O)₂(CH₃)Si (CH₂)₄C(H) (X)-CO₂R

(CH₃O)₃Si(CH₂)₉C(H)(X)-CO₂R

(CH₃O)₂(CH₃)Si (CH₂)₉C(H) (X)-CO₂R

(CH₃O)₃Si(CH₂)₃C(H) (X)-C₆H₅

(CH₃O)₂(CH₃)Si (CH₂)₃C(H) (X)-C₆H₅

(CH₃O)₃Si(CH₂)₄C(H)(X) -C₆H₅

(CH₃O)₂(CH₃)Si(CH₂)₄C(H) (X)-C₆H₅

(wherein X represents chlorine, bromine, or iodine, and R represents alkyl, aryl, or aralkyl having 1 to 20 carbon atoms).

Examples of the hydroxyl group-containing organic halide or halogenated sulfonyl compound include, but not limited to, the following:

HO- (CH₂)ₙ-OC(O)C(H) (R) (X)

(wherein X represents chlorine, bromine, or iodine, R represents hydrogen or alkyl, aryl, or aralkyl having 1 to 20 carbon atoms, and n represents an integer of 1 to 20).

Examples of the amino group-containing organic halide or halogenated sulfonyl compound include, but not limited to, the following:

H₂N-(CH₂)ₙ-OC(O)C(H)(R) (X)

(wherein X represents chlorine, bromine, or iodine, R represents hydrogen or alkyl, aryl, or aralkyl having 1 to 20 carbon atoms, and n represents an integer of 1 to 20).

Examples of the epoxy group-containing organic halide or halogenated sulfonyl compound include, but not limited to, the following: 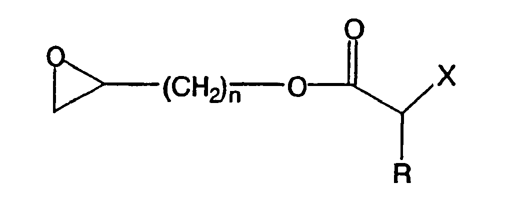 (wherein X represents chlorine, bromine, or iodine, R represents hydrogen or alkyl, aryl, or aralkyl having 1 to 20 carbon atoms, and n represents an integer of 1 to 20).

In order to produce a polymer having two or more terminal structures of the present invention per molecule, an organic halide or halogenated sulfonyl compound having two or more initiation points is preferably used. Specific examples of such a compound include the following:

o,m,p- X-CH₂-C₆H₄-CH₂-X

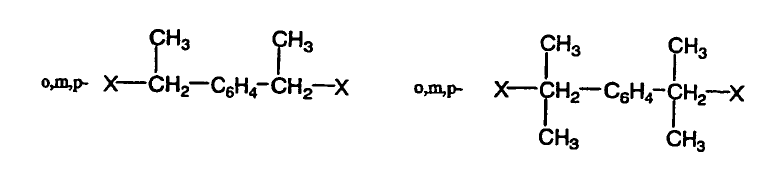

(wherein C₆H₄ represents phenylene, and X represents chlorine, bromine, or iodine). 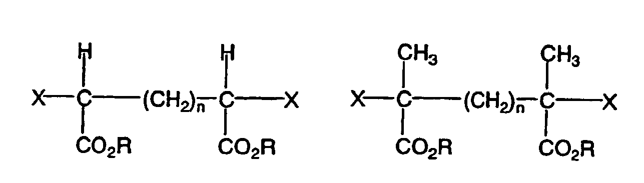 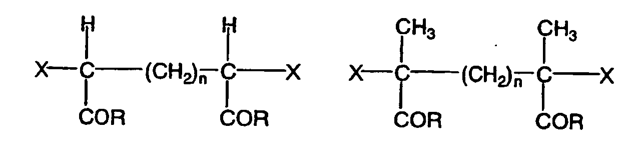 (wherein R represents alkyl, aryl, or aralkyl having 1 to 20 carbon atoms, n represents an integer of 0 to 20, and X represents chlorine, bromine, or iodine). 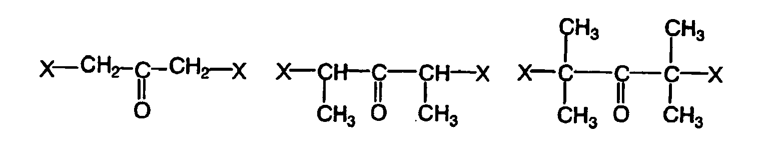 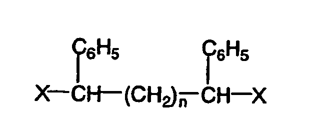 (wherein X represents chlorine, bromine, or iodine, and n represents an integer of 0 to 20). 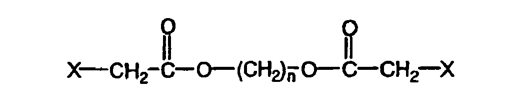 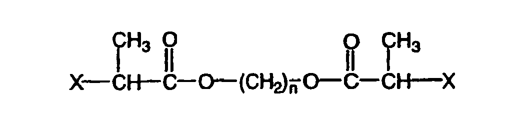 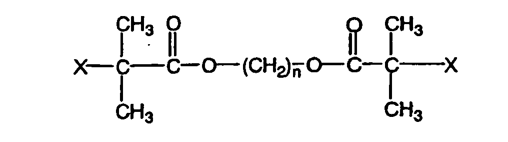 (wherein n represents an integer of 0 to 20, and X represents chlorine, bromine, or iodine).

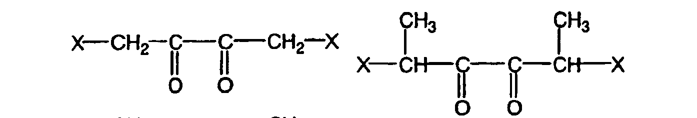

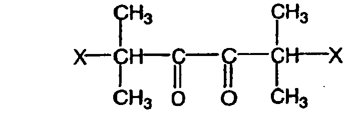

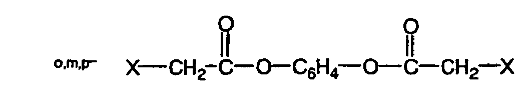

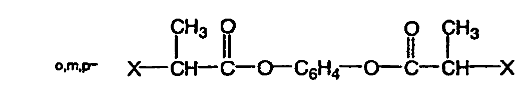

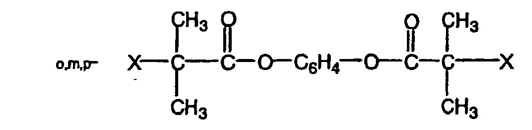

o,m,p- X-SO₂-C₆H₄-SO₂-X

(wherein X represents chlorine, bromine, or iodine).

The vinyl monomer used in the polymerization is not particularly limited, and any of the above-described examples can be preferably used.

The transition metal complex used as the polymerization catalyst is not particularly limited, but the metal complex preferably includes a VII, VIII, IX, X, or XI group element in the periodic table as a main metal. The metal complex is more preferably a complex of zero-valent copper, monovalent copper, divalent ruthenium, divalent iron, or divalent nickel, and most preferably a copper complex. Specific examples of a monovalent copper compounds include cuprous chloride, cuprous bromide, cuprous iodide, cuprous cyanide, cuprous oxide, and cuprous perchlorate. When a copper compound is used, a ligand such as 2,2'-bipyridyl or its derivative, 1,10-phenanthroline or its derivative, or a polyamine such as tetramethylethylenediamine, pentamethyldiethylenetriamine, hexamethyltris(2-aminoethyl)amine, or the like is added for increasing catalytic activity. A tristriphenylphosphine complex of divalent ruthenium chloride (RuCl₂(PPh₃)₃) is also preferred as the catalyst. When a ruthenium compound is used as the catalyst, an aluminum alkoxide is added as an activating agent. Furthermore, a bistriphenylphosphine complex of divalent iron (FeCl₂(PPh₃)₂), a bistriphenylphosphine complex of divalent nickel (NiCl₂(PPh₃)₂), and bistributylphosphine complex of divalent nickel (NiBr₂(PBu₃)₂) are preferred as the catalyst.

The polymerization can be performed without a solvent or in any one of various solvents. Examples of the type of the solvent include hydrocarbon solvents such as benzene and toluene; ether solvents such as diethyl ether and tetrahydrofuran; halogenated hydrocarbon solvents such as methylene chloride and chloroform; ketone solvents such as acetone, methyl ethyl ketone, and methyl isobutyl ketone; alcohol solvents such as methanol, ethanol, propanol, isopropanol, n-butyl alcohol, and tert-butyl alcohol; nitrile solvents such as acetonitrile, propionitrile, and benzonitrile; esters such as ethyl acetate and butyl acetate; and carbonate solvents such as ethylene carbonate and propylene carbonate. Theses solvents can be used alone or as a mixture of two or more. The polymerization can be performed in a range of room temperature to 200°C, and preferably 50 to 150°C.

### <Introduction of functional group>

Introduction of a terminal functional group in the polymer of the present invention will be described below.

Although the method for introducing a group represented by formula 1 at an end of the polymer of the present invention is not limited, the following methods can be used:
(1) A method of reacting an olefin polymer having a terminal structure represented by formula 2 with a compound represented by formula 3.

   -CR³R⁴X (2)

   (wherein R³ and R⁴ each represent a group bonded to an ethylenically unsaturated group of a vinyl monomer, and X represents chlorine, bromine, or iodine).

   M⁺⁻OC(O)C(R¹)=CHR² (3)

   (wherein R¹ and R² each represent hydrogen or an organic group having 1 to 20 carbon atoms, and M⁺ represents an alkali metal or a quaternary ammonium ion).
(2) A method of reacting a vinyl polymer terminated with a hydroxyl group with a compound represented by formula 4:

   XC(O)C(R¹)=CHR² (4)

   (wherein R¹ and R² each represent hydrogen or an organic group having 1 to 20 carbon atoms, and X represents chlorine, bromine, or hydroxyl).
(3) A method of reacting a vinyl polymer terminated with a hydroxyl group with a diisocyanate compound and then reacting the residual isocyanate group with a compound represented by formula 5:

   HO-R⁵-OC(O)C(R¹)=CHR² (5)

   (wherein R¹ and R² each represent hydrogen or an organic group having 1 to 20 carbon atoms, and R⁵ represents a divalent organic group having 2 to 20 carbon atoms).

Each of these methods will be described in detail below.

### <Method (1) for introducing functional group>

The method (1) will be described.

In the method (1), an olefin polymer having a terminal structure represented by formula 2 is reacted with a compound represented by formula 3.

-CR³R⁴X (2)

(wherein R³ and R⁴ each represent a group bonded to an ethylenically unsaturated group of a vinyl monomer, and X represents chlorine, bromine, or iodine).

m⁺⁻OC(O)C(R¹)=CHR² (3)

(wherein R¹ and R² each represent hydrogen or an organic group having 1 to 20 carbon atoms, and M⁺ represents an alkali metal or a quaternary ammonium ion).

The vinyl polymer having the terminal structure represented by formula 2 is produced by a method of polymerizing a vinyl monomer using a transition metal complex as a catalyst and the above-described organic halide or halogenated sulfonyl compound as a initiator, or a method of polymerizing a vinyl monomer using a halide as a chain transfer agent, and preferably the former method.

The compound represented by formula 3 is not particularly limited, but specific examples of R¹ and R² include -H, -CH₃, -CH₂CH₃, -(CH₂)ₙCH₃ (n represents an integer of 2 to 19) , -C₆H₅, -CH₂OH, and -CN, and -H and -CH₃ are preferred. M⁺ is a counter cation of an oxy anion, and examples of the type of M⁺ include alkali metal ions and a quaternary ammonium ion. Specific examples of the alkali metal ions include a lithium ion, a sodium ion, and a potassium ion. Examples of the quaternary ammonium ion include tetramethylammonium ion, tetraethylammonium ion, tetrabenzylammonium ion, trimethyldodecylammonium ion, tetrabutylammonium ion, and dimethylpiperidinium ion. Among these ions, a sodium ion and a potassium ion are preferred. The amount of the oxy anion of formula 3 used is preferably 1 to 5 equivalents and more preferably 1.0 to 1.2 equivalents relative to the halogen terminal of formula 2. The solvent used for carrying out the reaction is not particularly limited, but a polar solvent is preferred because the reaction is nucleophilic substitution. Examples of the solvent include tetrahydrofuran, dioxane, diethyl ether, acetone, dimethylsulfoxide, dimethylformamide, dimethylacetamide, hexamethylphosphoric triamide, and acetonitrile. Although the reaction temperature is not limited, the temperature is generally 0 to 70°C, and preferably 50°C or less and more preferably room temperature for maintaining the polymerizable terminal group.

### <Method (2) for introducing terminal functional group>

The method (2) will be described.

In the method (2), a vinyl polymer terminated with a hydroxyl group is reacted with a compound represented by formula 4:

XC(O)C(R¹)=CHR² (4)

(wherein R¹ and R² each represent hydrogen or an organic group having 1 to 20 carbon atoms, and X represents chlorine, bromine, or hydroxyl).

The compound represented by formula 4 is not particularly limited, but specific examples of R¹ and R² include -H, -CH₃, -CH₂CH₃, -(CH₂) ₙCH₃ (n represents an integer of 2 to 19), -C₆H₅, -CH₂OH, and -CN, and -H and -CH₃ are preferred.

The vinyl polymer terminated with a hydroxyl group is produced by a method of polymerizing a vinyl monomer using a transition metal complex as a catalyst and the above-described organic halide or halogenated sulfonyl compound as a initiator, or a method of polymerizing a vinyl monomer using a hydroxyl group-containing compound as a chain transfer agent, and preferably the former method. Examples of the method for producing the vinyl polymer terminated with a hydroxyl group include, but not limited to, the following:
(a) A method of reacting a compound having a polymerizable alkenyl group and a hydroxyl group per molecule as a second monomer during synthesis of the vinyl polymer by living radical polymerization, the compound being represented by formula (10):

   H₂C=C (R¹⁶)-R¹⁷-R¹⁸-OH (10)

   (wherein R¹⁶ may be the same or different and represents an organic group having 1 to 20 carbon atoms and preferably hydrogen or methyl; R¹⁷ represents -C(O)O- (ester group) or o-, m-, or p-phenylene; R¹⁸ represents a direct bond or a divalent organic group having 1 to 20 carbon atoms, which may contain at least one ether bond; when R¹⁷ is an ester group, the compound is a (meth)acrylate compound, and when R¹⁷ is a phenylene group, the compound is a styrene compound).
   The time to react the compound having a polymerizable alkenyl group and a hydroxyl group per molecule is not limited. However, particularly when a rubber property is desired, the compound is preferably reacted as the second monomer at the end of polymerization reaction or after the completion of reaction of a predetermined monomer.
(b) A method of reacting a compound having a low-polymerizable alkenyl group and a hydroxyl group per molecule as a second monomer at the end of polymerization reaction or after the completion of reaction of a predetermined monomer during synthesis of the vinyl polymer by living radical polymerization.
   Such a compound is not particularly limited, but a compound represented by formula 11 can be used.

   H₂C=C(R¹⁶)-R¹⁹-OH (11)

   (wherein R¹⁶ represents the same as the above, and R¹⁹ represents a divalent organic group having 1 to 20 carbon atoms, which may contain at least one ether bond).
   The compound represented by formula 11 is not particularly limited, but alkenyl alcohols such as 10-undecenol, 5-hexenol, and allyl alcohol are preferred from the viewpoint of easy availability.
(c) A method of reacting a halogen of a vinyl polymer produced by atom transfer radical polymerization and having at least one carbon-halogen bond represented by formula 2 with a hydrolyzable or hydroxyl group-containing compound to introduce a hydroxyl group at an end, as disclosed in Japanese Unexamined Patent Application Publication No. 4-132706.
(d) A method of reacting a vinyl polymer produced by atom transfer radical polymerization and having at least one carbon-halogen bond represented by formula 2 with a hydroxyl group-containing, stabilized carbanion represented by formula 12:

   M⁺C⁻(R²⁰) (R²¹)-R¹⁹-OH (12)

   (wherein R¹⁹ represents the same as the above; R²⁰ and R²¹ each represent an electron attractive group, which stabilizes carbanion C⁻, or one of R²⁰ and R²¹ is the electron attractive group, the other being hydrogen, alkyl having 1 to 10 carbon atoms or phenyl; examples of the electron attractive group as R²⁰ and R²¹ including -CO₂R (ester group), -C(O)R (keto group), -CON (R₂) (amido group), -COSR (thioester group), -CN (nitrile group), and -NO₂ (nitro group) (wherein substituent R is alkyl having 1 to 20 carbon atoms, aryl having 6 to 20 carbon atoms, or aralkyl having 7 to 20 carbon atoms, and preferably alkyl having 1 to 10 carbon atoms or phenyl); and -CO₂R, -C(O)R, and -CN are particularly preferred as R²⁰ and R²¹).
(e) A method of reacting a vinyl polymer produced by atom transfer radical polymerization and having at least one carbon-halogen bond represented by formula 2 with an elemental metal such as zinc or the like or an organometallic compound to prepare an enolate anion, and then reacting the anion with an aldehyde or ketone.
(f) A method of reacting a vinyl polymer having at least one terminal halogen, preferably halogen represented by formula 2, with a hydroxyl group-containing oxy anion represented by formula 13 below or a hydroxyl group-containing carboxylate anion represented by formula 14 below to replace the halogen with a hydroxyl group-containing substituent.

   HO-R¹⁹-O⁻M⁺ (13)

   (wherein R¹⁹ and M⁺ represent the same as the above).

   HO-R¹⁹-C(O)O⁻M⁺ (14)
(wherein R¹⁹ and M⁺ represent the same as the above).

In the present invention, among the methods (a) and (b) for introducing a hydroxyl group, in which halogen is not directly involved, the method (b) is more preferred in view of more ease of control.

Among the methods (c) to (f) for introducing a hydroxyl group by converting the halogen of the vinyl polymer having at least one carbon-halogen bond, the method (f) is more preferred in view of more ease of control.

### <Method (3) for introducing terminal functional group>

The method (3) will be described.

In the method (3), a vinyl polymer terminated with a hydroxyl group is reacted with a diisocyanate compound, and then the residual isocyanate group is reacted with a compound represented by formula 5:

HO-R⁵-OC(O)C(R¹)=CHR² (5)

(wherein R¹ and R² each represent hydrogen or an organic group having 1 to 20 carbon atoms, and R⁵ represents a divalent organic group having 2 to 20 carbon atoms).

The compound represented by formula 5 is not particularly limited, but specific examples of R¹ and R² include -H, -CH₃, -CH₂CH₃, -(CH₂)ₙCH₃ (n represents an integer of 2 to 19), -C₆H₅, -CH₂OH, and -CN, and -H and -CH₃ are preferred. Specific examples of the compound include 2-hydroxypropyl methacrylate.

The vinyl polymer terminated with a hydroxyl group is as described above.

The diisocyanate compound is not particularly limited, and any one of conventionally known compounds can be used. Examples of the diisocyanate compound include isocyanate compounds such as toluylene diisocyanate, 4,4'-diphenylmethane diisocyanate, hexamethyl diisocyanate, xylylene diisocyanate, meta-xylylene diisocyanate, 1,5-naphthalene diisocyanate, hydrogenated diphenylmethane diisocyanate, hydrogenated toluylene diisocyanate, hydrogenated xylylene diisocyanate, and isophorone diisocyanate. These compounds can be used alone or in combination of two or more. A block isocyanate may be used.

In order to utilize excellent weather resistance, a diisocyanate compound having no aromatic ring, for example, hexamethylene diisocyanate, hydrogenated diphenylmethane diisocyanate, or the like, is preferably used as a polyfunctional isocyanate compound (b).

### (Examples)

Although examples will be described below, the present invention is not limited to these examples.

In the examples and comparative examples, "parts" and "%" represent "parts by weight" and "% by weight", respectively.

### (Measurement of molecular weight distribution)

In the examples below, a "number-average molecular weight" and a "molecular weight distribution (ratio of weight-average molecular weight to number-average molecular weight) were calculated by a standard polystyrene calibration method using gel permeation chromatography (GPC). In this method, a column packed with crosslinked polystyrene gel (Shodex GPC K-804; manufactured by Showa Denko K. K.) was used as a GPC column, and chloroform was used as a GPC solvent.

In the examples below, the term "an average number of terminal (meth)acryloyl groups" means an average number of (meth)acryloyl groups introduced per molecule of a polymer. The average was calculated by ¹H NMR analysis and the number-average molecular weight determined by GPC.

### (Production Example 1) Production and purification of poly(n-butyl acrylate) terminated with bromine at one end

CuBr (4.2 parts) and acetonitrile (44.0 parts) were added to a reactor with an agitator, and the resultant mixture was stirred at 70°C for 15 minutes in a nitrogen atmosphere. Then, butyl acrylate (100 parts) and ethyl 2-bromobutylate (9.5 parts) were added to the mixture, followed by sufficient stirring. Then, pentamethyldiethylenetriamine (referred to as "triamine" hereinafter) (0.17 part) was added to initiate polymerization. Thereafter, butyl acrylate (400 parts) was continuously added dropwise under stirring and heating at 80°C. Triamine (0.68 part) was divided and added in the course of dropwise addition of the acrylate. When the reaction rate reached 96%, the residual monomer and acetonitrile were evaporated at 80°C to obtain a poly(n-butyl acrylate) (referred to as "polymer [1]" hereinafter) terminated with bromine at one end and having a number-average molecular weight of 11,800 and a molecular weight distribution of 1.08.

### (Removal of polymerization catalyst)

First, a filter aid (2 parts) (Radiolite 900 manufactured by Showa Chemical Industry Co., Ltd.) and methylcyclohexane (100 parts) were added relative to polymer [1] (100 parts), and the resultant mixture was stirred and heated at 80°C in a nitrogen atmosphere. The solid content was filtered off to obtain a methylcyclohexane solution of polymer [1].

Then, 4 parts of an adsorbent (Kyowaad 500SH 2 parts/Kyowaad 700SL 2 parts: both manufactured by Kyowa Chemical Co., Ltd.) relative to 100 parts of polymer [1] was added to the methylcyclohexane solution of polymer [1], followed by stirring and heating at 80°C in an oxygen-nitrogen mixed gas atmosphere. The insoluble substance was removed, and the polymer solution was concentrated to obtain a polymer (polymer [1']) terminated with bromine at one end. Polymer [1'] had a number-average molecular weight of 11,800 and a molecular weight distribution of 1.08.

### (Production Example 2) Production and purification of poly(n-butyl acrylate) terminated with bromine at both ends

CuBr (4.2 parts) and acetonitrile (44.0 parts) were added to a reactor with an agitator, and the resultant mixture was stirred at 70°C for 15 minutes in a nitrogen atmosphere. Then, butyl acrylate (100 parts) and diethyl 2,5-dibromoadipate (8.8 parts) were added to the mixture, followed by sufficient stirring. Then, triamine (0.17 part) was added to initiate polymerization. Thereafter, butyl acrylate (400 parts) was continuously added dropwise under stirring and heating at 80°C. Triamine (0.85 part) was divided and added in the course of dropwise addition of butyl acrylate. When the reaction rate reached 97%, the residual monomer and acetonitrile were evaporated at 80°C to obtain a polymer (referred to as "polymer [2]" hereinafter) terminated with bromine at both ends and having a number-average molecular weight of 24,200 and a molecular weight distribution of 1.23.

### (Removal of polymerization catalyst)

First, methylcyclohexane (100 parts) was added relative to polymer [2] (100 parts). After dilution, the solid content was filtered off to obtain a solution containing polymer [2].

Then, 10 parts of an adsorbent (Kyowaad 500SH 5 parts/Kyowaad 700SL 5 parts) relative to 100 parts of polymer [2] was added to the methylcyclohexane solution of polymer [2], followed by stirring and heating at 80°C in an oxygen-nitrogen mixed gas atmosphere. The insoluble substance was removed, and the polymer solution was concentrated to obtain a polymer (polymer [2']) terminated with bromine at both ends. Polymer [2'] had a number-average molecular weight of 24,500 and a molecular weight distribution of 1.20.

### (Production Example 3) Production and purification of poly(n-butyl acrylate/ethyl acrylate/2-methoxyethyl acrylate) terminated with bromine at both ends

CuBr (4.6 parts) and acetonitrile (41.6 parts) were added to a reactor with an agitator, and the resultant mixture was stirred at 65°C for 15 minutes in a nitrogen atmosphere. Then, acrylates (100 parts) (including n-butyl acrylate (27.6 parts), ethyl acrylate (39.8 parts), and 2-methoxyethyl acrylate (32.6 parts)) and diethyl 2,5-dibromoadipate (13.0 parts) were added to the mixture, followed by sufficient stirring. Then, triamine (0.09 part) was added to initiate polymerization. Thereafter, acrylates (400 parts) (including n-butyl acrylate (111 parts), ethyl acrylate (159 parts), and 2-methoxyethyl acrylate (130 parts)) were continuously added dropwise under stirring and heating at 70°C. Triamine (0.84 part) was divided and added in the course of dropwise addition of the acrylates. When the reaction rate reached 96%, the residual monomers and acetonitrile were evaporated at 80°C to obtain a poly(n-butyl acrylate/ethyl acrylate/2-methoxyethyl acrylate) (referred to as "polymer [3]" hereinafter) terminated with bromine at both ends and having a number-average molecular weight of 16,600 and a molecular weight distribution of 1.07.

### (Removal of polymerization catalyst)

First, a filter aid (1 part) (Radiolite 900 manufactured by Showa Chemical Industry Co., Ltd.) and 1 part of an adsorbent (Kyowaad 500SH 0.5 part/Kyowaad 700SL 0.5 part), and methylcyclohexane (100 parts) were added relative to polymer [3] (100 parts), and the solid content was filtered off to obtain a solution containing polymer [3].

Then, 4 parts of an adsorbent (Kyowaad 500SH 2 parts/Kyowaad 700SL 2 parts) relative to 100 parts of polymer [3] was added to the methylcyclohexane solution of polymer [3], followed by stirring and heating at 100°C in an oxygen-nitrogen mixed gas atmosphere. The insoluble substance was removed, and the polymer solution was concentrated to obtain a polymer (polymer [3']) terminated with bromine at both ends. Polymer [3'] had a number-average molecular weight of 16,700 and a molecular weight distribution of 1.08.

### (Example 1)

The solution of polymer [1'] (100 parts) produced in Production Example 1 was dissolved in N,N-dimethylacetamide (100 parts), and potassium acrylate (1.87 parts: manufactured by Asada Chemical Industry Co., Ltd.) and 4-hydroxy-2,2,6,6-tetramethylpiperidine-N-oxyl (0.01 part: manufactured by Degussa Japan Co., Ltd.) were added to the resultant solution, followed by stirring and heating at 70°C for 8 hours. The polymer at the end of reaction had a number-average molecular weight of 12,200 and a molecular weight distribution of 1.09. Then, N,N-dimethylacetamide was distilled off from the reaction mixture under reduced pressure at 100°C for 8 hours to obtain a crude product of poly(butyl acrylate) terminated with an acryloyl group at one end (referred to as "polymer [4]" hereinafter). Polymer [4] had a number-average molecular weight of 11,900 and a molecular weight distribution of 1.09. The polymer (100 parts) was dissolved in methylcyclohexane (100 parts), and the insoluble substance was removed. The solvent of the polymer solution was distilled off under reduced pressure (oxygen partial pressure; less than 10,000 Pa) at 90°C for 8 hours to obtain poly(butyl acrylate) terminated with an acryloyl group at one end (referred to as "polymer [4'] hereinafter). Polymer [4'] after purification had a number-average molecular weight of 11,900, a molecular weight distribution of 1.09, and an average number of terminal acryloyl groups of 0.88.

### (Comparative Example 1)

The solution of polymer [1'] (100 parts) produced in Production Example 1 was dissolved in N,N-dimethylacetamide (100 parts), and potassium acrylate (1.87 parts) and hydroquinone monomethyl ether (0.01 part) were added to the resultant solution, followed by stirring and heating at 70°C for 8 hours. The polymer at the end of reaction had a number-average molecular weight of 11,900 and a molecular weight distribution of 1.08. Then, N,N-dimethylacetamide was distilled off from the reaction mixture under reduced pressure at 100°C for 4 hours to obtain a crude product of poly(butyl acrylate) terminated with an acryloyl group at one end (referred to as "polymer [5]" hereinafter). Polymer [5] had a number-average molecular weight of 12,200 and a molecular weight distribution of 1.15. The polymer (100 parts) was dissolved in methylcyclohexane (100 parts), and the insoluble substance was removed. The solvent of the polymer solution was distilled off under reduced pressure (oxygen partial pressure; less than 10,000 Pa) at 80°C for 3 hours to obtain a poly(butyl acrylate) terminated with an acryloyl group at one end (referred to as "polymer [5'] hereinafter). Polymer [5'] after purification had a number-average molecular weight of 12,200, a molecular weight distribution of 1.18, and an average number of terminal acryloyl groups of 0.87.

### (Example 2)

Polymer [2'] (100 parts) produced in Production Example 2 was dissolved in N,N-dimethylacetamide (100 parts), and potassium acrylate (1.80 parts) and 4-hydroxy-2,2,6,6-tetramethyl-1-oxyl-piperidine (0.01 part) were added to the resultant solution, followed by stirring and heating at 70°C for 8 hours. The polymer at the end of reaction had a number-average molecular weight of 25,900 and a molecular weight distribution of 1.23. Then, N,N-dimethylacetamide was distilled off from the reaction mixture under reduced pressure at 100°C for 8 hours to obtain a crude product of poly(butyl acrylate) terminated with acryloyl groups at both ends (referred to as "polymer [6]" hereinafter). Polymer [6] had a number-average molecular weight of 26,000 and a molecular weight distribution of 1.24. The polymer (100 parts) was dissolved in methylcyclohexane (100 parts), and the insoluble substance was removed. The solvent of the polymer solution was distilled off under reduced pressure (oxygen partial pressure; less than 10,000 Pa) at 100°C for 4 hours to obtain a poly(butyl acrylate) terminated with acryloyl groups at both ends (referred to as "polymer [4']" hereinafter). Polymer [6'] after purification had a number-average molecular weight of 25,600, a molecular weight distribution of 1.25, an average number of terminal acryloyl groups of 1.74.

Next, 0.025 g of 2,2-diethoxyacetophenone (10 wt% acetone solution) was added to 5.0 g of polymer [6'], followed by sufficient mixing.

The thus-obtained composition was poured into a mold, and the volatile substance was distilled off under reduced pressure. Then, the composition was irradiated with light for 20 minutes at an irradiation distance of 15 cm from a high-pressure mercury lamp (SHL-100UVQ-2; manufactured by Toshiba Lightech K. K.) to obtain a rubbery cured product. The resultant rubbery cured product was immersed in toluene for 2 days, and a gel fraction was measured. As a result, the gel fraction was 97%, and it was thus found that optical photoradical curing of polymer [6'] is not inhibited by 4-hydroxy-2,2,6,6-tetramethyl-1-oxyl-piperidine (0.01 part).

### (Comparative Example 2)

Polymer [2'] (100 parts) produced in Production Example 2 was dissolved in N,N-dimethylacetamide (100 parts), and potassium acrylate (1.45 parts) and hydroquinone monomethyl ether (0.05 part) were added to the resultant solution, followed by stirring and heating at 70°C for 3 hours. The polymer at the end of reaction had a number-average molecular weight of 25,200 and a molecular weight distribution of 1.20. Then, N,N-dimethylacetamide was distilled off from the reaction mixture under reduced pressure at 100°C for 4 hours to obtain a crude product of poly(butyl acrylate) terminated with an acryloyl group (referred to as "polymer [7]" hereinafter). The crude product of polymer [7] had a number-average molecular weight of 27,100 and a molecular weight distribution of 1.77. The polymer was dissolved in methylcyclohexane (about 300 parts), and the insoluble substance was removed. The solvent of the polymer solution was distilled off under reduced pressure (oxygen partial pressure; less than 10,000 Pa) at 80°C for 3 hours to obtain a poly(butyl acrylate) terminated with acryloyl groups at both ends (referred to as "polymer [7']" hereinafter). Polymer [7'] after purification had a number-average molecular weight of 27,100, a molecular weight distribution of 1.81, and an average number of terminal acryloyl groups of 1.65.

### (Example 3)

Polymer [3'] (100 parts) produced in Production Example 3 was dissolved in N,N-dimethylacetamide (100 parts), and potassium acrylate (2.37 parts) and 4-hydroxy-2,2,6,6-tetramethyl-1-oxyl-piperidine (0.01 part) were added to the resultant solution, followed by stirring and heating at 70°C for 8 hours. The polymer at the end of reaction had a number-average molecular weight of 17,700 and a molecular weight distribution of 1.12. Then, N,N-dimethylacetamide was distilled off from the reaction mixture under reduced pressure at 100°C for 8 hours to obtain a crude product of poly(n-butyl acrylate/ethyl acrylate/2-methoxyethyl acrylate) terminated with acryloyl groups at both ends (referred to as "polymer [8]" hereinafter). Polymer [8] had a number-average molecular weight of 17,800 and a molecular weight distribution of 1.14. The polymer (100 parts) was dissolved in toluene (100 parts), and the insoluble substance was removed. The solvent of the polymer solution was distilled off under reduced pressure (oxygen partial pressure; less than 10,000 Pa) at 100°C for 6 hours to obtain a poly(n-butyl acrylate/ethyl acrylate/2-methoxyethyl acrylate) terminated with acryloyl groups at both ends (referred to as "polymer [8']" hereinafter). Polymer [8'] after purification had a number-average molecular weight of 16,900, a molecular weight distribution of 1.14, an average number of terminal acryloyl groups of 1.80.

### (Comparative Example 3)

Polymer [3'] (100 parts) produced in Production Example 3 was dissolved in N,N-dimethylacetamide (100 parts), and potassium acrylate (2.43 parts) and hydroquinone monomethyl ether (0.05 part) were added to the resultant solution, followed by stirring and heating at 70°C for 4 hours. The polymer at the end of reaction had a number-average molecular weight of 17,600 and a molecular weight distribution of 1.15. Then, N,N-dimethylacetamide was distilled off from the reaction mixture under reduced pressure at 100°C for 4 hours to obtain a crude product of poly(n-butyl acrylate/ethyl acrylate/2-methoxyethyl acrylate) terminated with an acryloyl group (referred to as "polymer [9]" hereinafter). Polymer [9] had a number-average molecular weight of 19,400 and a molecular weight distribution of 2.18.

The above-described examples and comparative examples show that increases in the molecular weight and/or the molecular weight distribution (Mw/Mn value) of a polymer (due to polymerization reaction between the terminals of the polymer) are inhibited by carrying out the production process of the present invention.

### Industrial Applicability

By adding a stable free radical compound as a polymerization inhibitor, a vinyl polymer terminated with a group having a polymerizable carbon-carbon double bond, which has had difficulty in securing thermal stability, can be significantly stabilized to secure high quality.

## Claims

1. A process for producing a vinyl polymer terminated with a group having a polymerizable carbon-carbon double bond, wherein the vinyl polymer terminated with a group having a polymerizable carbon-carbon double bond is produced and is obtained in the presence of a stable free radical.

2. The process according to claim 1, wherein the group having the polymerizable carbon-carbon double bond in the vinyl polymer is represented by formula (1) :
-OC(O)C(R¹)=CHR² (1)
wherein R¹ and R² are the same or different and each represent hydrogen or an organic group having 1 to 20 carbon atoms.

3. The process according to claim 2, wherein in formula (1), R¹ and R² are the same or different and each represent hydrogen or a saturated or unsaturated hydrocarbon group having 1 to 10 carbon atoms.

4. The process according to claim 2 or 3, wherein in formula (1), R¹ and R² are the same or different and each represent hydrogen, methyl, phenyl, or 1-propenyl.

5. The process according to any one of claims 1 to 4, wherein the vinyl polymer is a (meth)acrylic polymer.

6. The process according to claim 5, wherein the vinyl polymer is an acrylic ester polymer.

7. The process according to any one of claims 1 to 4, wherein the vinyl polymer is a styrene polymer.

8. The process according to any one of claims 1 to 7, wherein the main chain of the vinyl polymer is produced by living radical polymerization.

9. The process according to claim 8, wherein the living radical polymerization is atom transfer radical polymerization.

10. The process according to claim 9, wherein the atom transfer radical polymerization is performed using a complex of a metal selected from the group consisting of copper, nickel, ruthenium, and iron.

11. The process according to claim 10, wherein a copper complex is used.

12. The process according to any one of claims 1 to 7, wherein the main chain of the vinyl polymer is produced by polymerizing a vinyl monomer using a chain transfer agent.

13. The process according to any one of claims 1 to 12, wherein the vinyl polymer terminated with a group having a polymerizable carbon-carbon double bond is produced by reaction between a vinyl polymer having a terminal structure represented by formula (2):
-CR³R⁴X (2)
wherein R³ and R⁴ each represent a group bonded to an ethylenically unsaturated group of a vinyl monomer, and X represents chlorine, bromine, or iodine,
and a compound represented by formula (3):
M⁺⁻OC(O)C(R¹)=CHR² (3)
wherein R¹ and R² are the same or different and each represent hydrogen or an organic group having 1 to 20 carbon atoms, and M⁺ represents an alkali metal or quaternary ammonium ion.

14. The process according to any one of claims 1 to 12, wherein the vinyl polymer terminated with a group having a polymerizable carbon-carbon double bond is produced by reaction between a vinyl polymer terminated with a hydroxyl group and a compound represented by formula (4):
XC(O)C(R¹)=CHR² (4)
wherein R¹ and R² are the same or different and each represent hydrogen or an organic group having 1 to 20 carbon atoms, and X represents chlorine, bromine, or a hydroxyl group.

15. The process according to any one of claims 1 to 12, wherein the vinyl polymer terminated with a group having a polymerizable carbon-carbon double bond is produced by reaction between a vinyl polymer terminated with an isocyanate group and a compound represented by formula (5):
HO-R⁵-OC(O)C(R¹)=CHR² (5)
wherein R¹ and R² are the same or different and each represent hydrogen or an organic group having 1 to 20 carbon atoms, and R⁵ represents a divalent organic group having 2 to 20 carbon atoms.

16. The process according to any one of claims 1 to 15, wherein the vinyl polymer has a number-average molecular weight of 2,000 or more.

17. The process according to any one of claims 1 to 16, wherein the vinyl polymer has a ratio (Mw/Mn) of a weight-average molecular weight (Mw) to a number-average molecular weight (Mn) of less than 1.8 according to gel permeation chromatographic measurement.

18. The process according to claim 1, comprising distilling off a solvent from a solution containing the vinyl polymer by heating under reduced pressure in the presence of the stable free radical.

19. The process according to claim 1, wherein the process is carried out under the condition in which the oxygen partial pressure is 10,000 Pa or less.

## Patentansprüche

1. Verfahren zur Herstellung eines Vinylpolymers, das mit einer Gruppe mit einer polymerisierbaren Kohlenstoff-Kohlenstoff-Doppelbindung abgeschlossen wird, wobei das Vinylpolymer, das von einer Gruppe mit einer polymerisierbaren Kohlenstoff-Kohlenstoff-Doppelbindung abgeschlossen wird, in Gegenwart eines stabilen und freien Radikals hergestellt und erhalten wird.

2. Verfahren nach Anspruch 1, wobei die Gruppe mit der polymerisierbaren Kohlenstoff-Kohlenstoff-Doppelbindung in dem Vinylpolymer dargestellt wird durch Formel (1):
-OC(O)C(R¹)=CHR² (1)
wobei R¹ und R² dieselben oder verschieden sind und jedes Wasserstoff oder eine organische Gruppe mit 1 bis 20 Kohlenstoffatomen darstellt.

3. Verfahren nach Anspruch 2, wobei bei Formel (1) R¹ und R² dieselben oder verschieden sind und jedes Wasserstoff oder eine gesättigte oder ungesättigte Kohlenwasserstoffgruppe mit 1 bis 10 Kohlenstoffatomen darstellt.

4. Verfahren nach Anspruch 2 oder 3, wobei in Formel (1) R¹ und R² dieselben oder verschieden sind und jedes Wasserstoff, Methyl, Phenyl oder 1-Propenyl darstellt.

5. Verfahren nach einem der Ansprüche 1 bis 4, wobei das Vinylpolymer ein (Meth)acrylpolymer ist.

6. Verfahren nach Anspruch 5, wobei das Vinylpolymer ein Acrylesterpolymer ist.

7. Verfahren nach einem der Ansprüche 1 bis 4, wobei das Vinylpolymer ein Styrolpolymer ist.

8. Verfahren nach einem der Ansprüche 1 bis 7, wobei die Hauptkette des Vinylpolymers hergestellt wird durch Polymerisation mit lebenden Radikalen.

9. Verfahren nach Anspruch 8, wobei die Polymerisation mit lebenden Radikalen eine Radikalpolymerisation mit Atomtransfer ist.

10. Verfahren nach Anspruch 9, wobei die Radikalpolymerisation mit Atomtransfer ausgeführt wird unter Verwendung eines Komplexes eines Metalls, das gewählt ist aus der Gruppe, die besteht aus Kupfer, Nickel, Ruthenium und Eisen.

11. Verfahren nach Anspruch 10, wobei ein Kupferkomplex verwendet wird.

12. Verfahren nach einem der Ansprüche 1 bis 7, wobei die Hauptkette des Vinylpolymers hergestellt wird durch Polymerisieren eines Vinylmonomers unter Verwendung eines Kettenüberführungsmittels.

13. Verfahren nach einem der Ansprüche 1 bis 12, wobei das Vinylpolymer, das von einer Gruppe mit einer polymerisierbaren Kohlenstoff-Kohlenstoff-Doppelbindung abgeschlossen wird, durch Reaktion von einem Vinylpolymer mit einer Abschlußstruktur, die dargestellt ist durch Formel (2):
-CR³R⁴X (2)
wobei R³ und R⁴ jedes eine Gruppe darstellt, die an eine ethylenisch ungesättigte Gruppe eines Vinylpolymers gebunden ist, und X Chlor, Brom oder lod darstellt,
mit einer Verbindung hergestellt wird, die dargestellt ist durch Formel (3):
M⁺⁻OC(O)C(R¹)=CHR² (3)
wobei R¹ und R² dieselben oder verschieden sind und jedes Wasserstoff oder eine organische Gruppe mit 1 bis 20 Kohlenstoffatomen darstellt und M⁺ ein Alkalimetall oder quaternäres Ammoniumion darstellt.

14. Verfahren nach einem der Ansprüche 1 bis 12, wobei das Vinylpolymer, das von einer Gruppe mit einer polymerisierbaren Kohlenstoff-Kohlenstoff-Doppelbindung abgeschlossen wird, durch Reaktion von einem Vinylpolymer, das von einer Hydroxylgruppe abgeschlossen wird, mit einer Verbindung, die dargestellt ist durch Formel (4):
XC(O)C(R¹)=CHR² (4)
hergestellt wird, wobei R¹ und R² dieselben oder verschieden sind und jedes Wasserstoff oder eine organische Gruppe mit 1 bis 20 Kohlenstoffatomen darstellt und X Chlor, Brom oder eine Hydroxylgruppe darstellt.

15. Verfahren nach einem der Ansprüche 1 bis 12, wobei das Vinylpolymer, das von einer Gruppe mit einer polymerisierbaren Kohlenstoff-Kohlenstoff-Doppelbindung abgeschlossen ist, durch Reaktion von einem Vinylpolymer, das von einer Isocyanatgruppe abgeschlossen ist, mit einer Verbindung hergestellt wird, die dargestellt ist durch Formel (5):
HO-R⁵-OC(O)C(R¹)=CHR² (5)
wobei R¹ und R² dieselben oder verschieden sind und jedes Wasserstoff oder eine organische Gruppe mit 1 bis 20 Kohlenstoffatomen darstellt, und R⁵ eine divalente organische Gruppe mit 2 bis 20 Kohlenstoffatomen darstellt.

16. Verfahren nach einem der Ansprüche 1 bis 15, wobei das Vinylpolymer eine durchschnittliche Molekulargewichtszahl von 2000 oder mehr hat.

17. Verfahren nach einem der Ansprüche 1 bis 16, wobei das Vinylpolymer ein Verhältnis (Mw/Mn) eines durchschnittlichen Molekulargewichts (Mw) zu einer durchschnittlichen Molekulargewichtszahl (Mn) von weniger als 1,8 gemäß Gelpermeationschromatographiemessung hat.

18. Verfahren nach Anspruch 1, umfassend das Abdestillieren eines Lösungsmittels aus einer Lösung, die das Vinylpolymer enthält, durch Erhitzen unter vermindertem Druck in Gegenwart des stabilen freien Radikals.

19. Verfahren nach Anspruch 1, wobei das Verfahren ausgeführt wird unter der Bedingung, bei welcher der Sauerstoffpartialdruck 10000 Pa oder weniger ist.

## Revendications

1. Procédé pour la production d'un polymère vinylique terminé par un groupe présentant une double liaison carbone-carbone polymérisable, dans lequel le polymère vinylique terminé par un groupe présentant une double liaison carbone-carbone polymérisable est produit et est obtenu en présence d'un radical libre stable.

2. Procédé selon la revendication 1, dans lequel le groupe présentant la double liaison carbone-carbone polymérisable dans le polymère vinylique est représenté par la formule (1) :
-OCCO)C(R¹)=CHR² (1)
dans laquelle R¹ et R² sont identiques ou différents et représentent chacun un atome d'hydrogène ou un groupe organique ayant de 1 à 20 atomes de carbone.

3. Procédé selon la revendication 2, dans lequel dans la formule (1), R¹ et R² sont identiques ou différents et représentent chacun un atome d'hydrogène ou un groupe hydrocarboné saturé ou insaturé ayant de 1 à 10 atomes de carbone.

4. Procédé selon la revendication 2 ou 3, dans lequel dans la formule (1), R¹ et R² sont identiques ou différents et représentent chacun un atome d'hydrogène, un groupe méthyle, phényle ou 1-propényle.

5. Procédé selon l'une quelconque des revendications 1 à 4, dans lequel le polymère vinylique est un polymère (méth)acrylique.

6. Procédé selon la revendication 5, dans lequel le polymère vinylique est un polymère d'ester acrylique.

7. Procédé selon l'une quelconque des revendications 1 à 4, dans lequel le polymère vinylique est un polymère de styrène.

8. Procédé selon l'une quelconque des revendications 1 à 7, dans lequel la chaîne principale du polymère vinylique est produite par une polymérisation radicalaire vivante.

9. Procédé selon la revendication 8, dans lequel la polymérisation radicalaire vivante est une polymérisation radicalaire par transfert d'atome.

10. Procédé selon la revendication 9, dans lequel la polymérisation radicalaire par transfert d'atome est réalisée en utilisant un complexe d'un métal choisi parmi le cuivre, le nickel, le ruthénium et le fer.

11. Procédé selon la revendication 10, dans lequel on utilise un complexe du cuivre.

12. Procédé selon l'une quelconque des revendications 1 à 7, dans lequel la chaîne principale du polymère vinylique est produite par polymérisation d'un monomère vinylique en utilisant un agent de transfert de chaîne.

13. Procédé selon l'une quelconque des revendications 1 à 12, dans lequel le polymère vinylique terminé par un groupe présentant une double liaison carbone-carbone polymérisable est produit par réaction entre un polymère vinylique ayant une structure terminale représentée par la formule (2) :
-CR³R⁴X (2)
dans laquelle R³ et R⁴ représentent chacun un groupe lié à un groupe éthyléniquement insaturé d'un monomère vinylique, et X représente le chlore, le brome ou l'iode,
et un composé représenté par la formule (3) :
M⁺⁻OC(O)C(R¹)=CHR² (3)
dans laquelle R¹ et R² sont identiques ou différents et représentent chacun un atome d'hydrogène ou un groupe organique ayant de 1 à 20 atomes de carbone et M⁺ représente un métal alcalin ou un ion ammonium quaternaire.

14. Procédé selon l'une quelconque des revendications 1 à 12, dans lequel le polymère vinylique terminé avec un groupe présentant une double liaison carbone-carbone polymérisable est produit par réaction entre un polymère vinylique terminé par un groupe hydroxyle et un composé représenté par la formule (4) :
XC(O)C(R¹)=CHR² (4)
dans laquelle R¹ et R² sont identiques ou différents et représentent chacun un atome d'hydrogène ou un groupe organique ayant de 1 à 20 atomes de carbone, et X représente le chlore, le brome ou un groupe hydroxyle.

15. Procédé selon l'une quelconque des revendications 1 à 12, dans lequel le polymère vinylique terminé par un groupe présentant une double liaison carbone-carbone polymérisable est produit par réaction entre un polymère vinylique terminé par un groupe isocyanate et un composé représenté par la formule (5) :
HO-R⁵-OC(O)C(R¹)=CHR² (5)
dans laquelle R¹ et R² sont identiques ou différents et représentent chacun un atome d'hydrogène ou un groupe organique ayant de 1 à 20 atomes de carbone et R⁵ représente un groupe organique divalent ayant de 2 à 20 atomes de carbone.

16. Procédé selon l'une quelconque des revendications 1 à 5, dans lequel le polymère vinylique présente un poids moléculaire moyen en nombre de 2 000 ou supérieur.

17. Procédé selon l'une quelconque des revendications 1 à 16, dans lequel le polymère vinylique présente un rapport (Mw/Mn) d'un poids moléculaire moyen en poids (Mw) à un poids moléculaire moyen en nombre (Mn) inférieur à 1,8 selon une mesure chromatographique par perméation sur gel.

18. Procédé selon la revendication 1 comprenant l'élimination par distillation d'un solvant à partir d'une solution contenant le polymère vinylique par chauffage sous pression réduite en présence du radical libre stable.

19. Procédé selon la revendication 1, dans lequel le procédé est réalisé dans la condition dans laquelle la pression partielle d'oxygène est de 10 000 Pa ou inférieure.
